# EUROPÄISCHE PATENTSCHRIFT

(11) **EP 2 567 447 B1**
(45) Veröffentlichungstag und Bekanntmachung des Hinweises auf die Patenterteilung: **24.06.2020**
(21) Anmeldenummer: 11831797.3
(22) Anmeldetag: 03.05.2011
(51) Int. Cl.: H02K 1/14, H02K 5/128, H02K 15/02, H02K 21/14

(54) **PUMPE MIT INTEGRIERTEM ELEKTRONISCH KOMMUTIERTEN GLEICHSTROMMOTOR**
PUMP HAVING AN INTEGRATED ELECTRONICALLY COMMUTATED DIRECT-CURRENT MOTOR
POMPE DOTÉE D'UN MOTEUR À COURANT CONTINU INTÉGRÉ À COMMUTATION ÉLECTRONIQUE

(30) Priorität: 06.05.2010 DE 102010019502
(43) Veröffentlichungstag der Anmeldung: 13.03.2013
(60) Teilanmeldung: 14159239.4
(73) Patentinhaber: Bühler Motor GmbH, 90459 Nürnberg (DE)
(72) Erfinder: BERNREUTHER, Georg, 90449 Nürnberg (DE); PETERREINS, Thomas, 90491 Nürnberg (DE)
(86) Internationale Anmeldenummer: PCT/DE2011/050012
(87) Internationale Veröffentlichungsnummer: WO 2012/048684

(56) Entgegenhaltungen:
- EP-A1- 0 591 724
- DE-A1-102006 021 246
- JP-A- 2005 151 741

## Beschreibung

Die Erfindung betrifft eine Pumpe (1) mit integriertem elektronisch kommutierten Gleichstrommotor (2) mit permanentmagnetischem in einem Nassraum angeordneten Innenrotor, der mit einem Kreiselpumpenlaufrad (22) eine kompakte Pumpenrotorbaueinheit (3) bildet, einem in einem Trockenraum (4) angeordneten, Klauenpolbleche (6) aus weichmagnetischem Werkstoff, eine ringförmige Wicklung (12) und einen auf die Klauenpolbleche (6) montierten und um die Wicklung (12) herum angeordneten weichmagnetischen Rückschlussring (13) umfassenden, Klauenpolstator (9) und einem Spalttopf (10), der den Trockenraum vom Nassraum (5) trennt.

Aus der DE 10 2006 021 246 A1 ist eine gattungsgemäße Pumpe bekannt, die mit einem Klauenpolstator, bestehend aus zwei Klauenpolblechen mit ineinandergreifenden, gegensinnige Pole bildenden achsparallelen Klauen, versehen ist. Da die Klauenpolbleche jeweils aus einem einzigen weichmagnetischen Blech gebildet sind, gerät der Stator vor allem im Bereich der axialen Statorenden bei höherer an die Wicklung angelegter Spannung in Sättigung, wodurch die Leistungsfähigkeit der Pumpe begrenzt ist. Klauenpolstatoren zeichnen sich durch einfache Herstellbarkeit, geringes Gewicht und Robustheit aus, daher scheidet in vielen Fällen der Einsatz von Ankerstatoren, mit einer Vielzahl von Einzelpolwicklungen und einem geblechten Statorpaket insbesondere bei Einsatz als Zusatzwasserpumpe im Kraftfahrzeug aus.

Aufgabe der vorliegenden Erfindung ist es daher eine Pumpe darzustellen, mit der höhere Wirkungsgrade und Leistungen erzielbar sind als mit herkömmlichen Klauenpolstatoren und dabei aber deren Vorteile im wesentlichen beibehalten werden können, insbesondere geringes Gewicht, einfacher Aufbau und damit wirtschaftliche Herstellbarkeit und Robustheit.

Diese Aufgabe wird erfindungsgemäß durch das Kennzeichen des Anspruchs 1 gelöst. Durch die vier Klauenpolbleche vergrößert sich der Querschnitt der weichmagnetischen Pole, wodurch diese einen größeren magnetischen Fluss aufnehmen können. Der grundsätzliche Aufbau ändert sich nur unwesentlich gegenüber der bewährten Ausführung. Es ist weiterhin möglich die Pumpe mit einer einzigen Statorspule zu betreiben. Durch die unterschiedliche Länge der Klauenpole kann Gewicht gespart werden, ohne den grundsätzlichen Aufbau zu ändern. Durch die langen Klauenpole kann eine größere Polfläche nutzbar gemacht werden. Die erzielte höhere Leistung rechtfertigt den hierbei nötigen höheren Fertigungsaufwand. Die kürzeren Klauenpole können mit herkömmlichen wirtschaftlich sehr günstigen Methoden nämlich durch Ausstanzen aus einem Blech und Abwinklung aus der Blechebene hergestellt werden. Durch den gleichen Radius im Übergangsbereich verbleibt zwischen den beiden Klauenpolblechen dort ein geringer Freiraum, wodurch gewährleistet ist, dass die beiden Klauenpolbleche stets eng aneinenader anliegen können.

Weiterbildungen der Erfindung sind in den Unteransprüchen dargestellt. Da die Länge der Klauenpole (77, 77') in achsparalleler Richtung, die radial weiter von der Pumpenrotorbaueinheit entfernt angeordnet sind, kleiner als der Radius desselben einbeschriebenen Kreises ist, kann bei höherem Wirkungsgrad gleichzeitig das zusätzliche Gewicht der kürzeren Klauenpole begrenzt werden.

Es hat sich gezeigt, dass die kürzeren Klauenpole mit einer Klauenpolfläche zwischen 40% und 75% und/oder Längen von 30% bis 60% der längeren Klauenpole die genannten Voraussetzungen erfüllen.

Es kann vorteilhaft sein, die Blechdicke der kürzeren Klauenpole kleiner zu wählen als die Blechdicke der längeren Klauenpole, wenn dadurch die geforderte Leistung erreichbar ist. Dadurch wird weiter Gewicht eingespart und die Fertigung noch wirtschaftlicher möglich.

Um die Wirbelstromverluste im Stator so gering wie möglich zu halten wird vorgeschlagen die den aneinander anliegenden Flächen der Klauenpolbleche mit einer Isolierschicht zu versehen. Geeignet sind hier übliche Lackschichten, wie sie auch bei Blechpaketen üblich sind.

Bei aufeinanderliegenden Blechen im magnetischen Kreis, kann es zu vibrationen kommen, die unangenehme Geräusche verursachen. Um diesen Effekt zu vermeiden oder zumindest deutlich einzuschränken, ist vorgesehen dass die Klauenpole eines Klauenpolblechs in einem Vormontagezustand in geringem Maße konisch verformt sind, soweit dass ein Zurückbewegen bis zu einer Achsparallelen innerhalb des elastischen Bereichs möglich ist und dass die verformten Klauenpole im montierten Zustand zumindest teilweise in Richtung der Achsparallelen zurückbewegt und in dieser Lage mit den benachbarten gleichpoligen Klauenpolen unter mechanischer Vorspannung verbunden sind. Die mechanische Vorspannung verhindert, dass Klauenpole frei schwingen und damit Geräusche verursachen können. Zusätzlich kann die Fixierung noch verstärkt werden durch Vernippelung, Klebung oder Punktschweißung. Es ist auch möglich, dass die mechanische Vorspannung durch das Fügen der Klauenpolbleche miteinander hergestellt wird.

Da das Klauenpolblech mit den längeren Klauenpolen in der Regel den größeren magnetischen Fluss aufnimmt ist es wichtig den magnetischen Kreis über diese Bleche mit dem magnetischen Rückschluss möglichst verlustfrei zu schließen. Um daher toleranzbedingte Luftspalte so gering wie möglich zu halten weist der Ring der Klauenpole mit den kürzeren Klauenpolen einen geringfügig kleineren Außendurchmesser als der Ring der Klauenpole mit den längeren Klauenpolen auf. Hierzu genügt ein Durchmesserunterschied von weniger als 0,1mm. Somit wird gewährleistet, dass der Rückschlussring bevorzugt am Ring mit dem größeren Durchmesser und dem größeren magnetischen Fluss anliegt.

Um die Robustheit der Statoreinheit zu verbessern und die Körperschallübertragung zu minimieren, ist erfindungsgemäss vorgesehen, dass zumindest an einen Ring (8, 8') eines Klauenpolblechs an einer von der Wicklung abgewandten Seite ein Kunststoffformkörper (14) anschließt, der Aufnahmemittel (15, 17) für eine Leiterplatte (16) und Klemmschneidverbinder (18) aufweist, wobei der Kunststoffformkörper (14) durch Umspritzen hergestellt ist und die vier Klauenpolbleche (6, 6', 66, 66') zumindest teilweise umschließt und fixiert wodurch der Stator einen kompakten Ringkörper bildet, der nur über rippenartige und/oder noppenartige Bereiche am Spaltrohr fest anliegt.

Ein Ausführungsbeispiel der Erfindung wird nachfolgend anhand der Zeichnung näher erläutert. Es zeigen:
- Fig.1: einen aus zwei unterschiedlichen Klauenpolblechen bestehenden Teilstatorkern,
- Fig. 2: einen aus zwei Teilstatoren aus Fig. 1 zusammengesetzten Statorkern,
- Fig. 3: eine andere Darstellung der zwei Teilstatoren aus anderer Perspektive,
- Fig. 4: eine andere Darstellung der Klauenpolbleche gemäß Anspruch 1,
- Fig. 5: eine Darstellung von Fig. 4 aus anderer Perspektive,
- Fig. 6: eine Schnittansicht einer Pumpe,
- Fig. 7: ein Detailansicht der Klauenpolbleche,
- Fig. 8: eine körperschallminimierende Statoraufnahme,
- Fig. 9: eine Explosionsdarstellung von Teilen der Pumpe und
- Fig. 10: eine weitere Explosionsdarstellung der Pumpe.

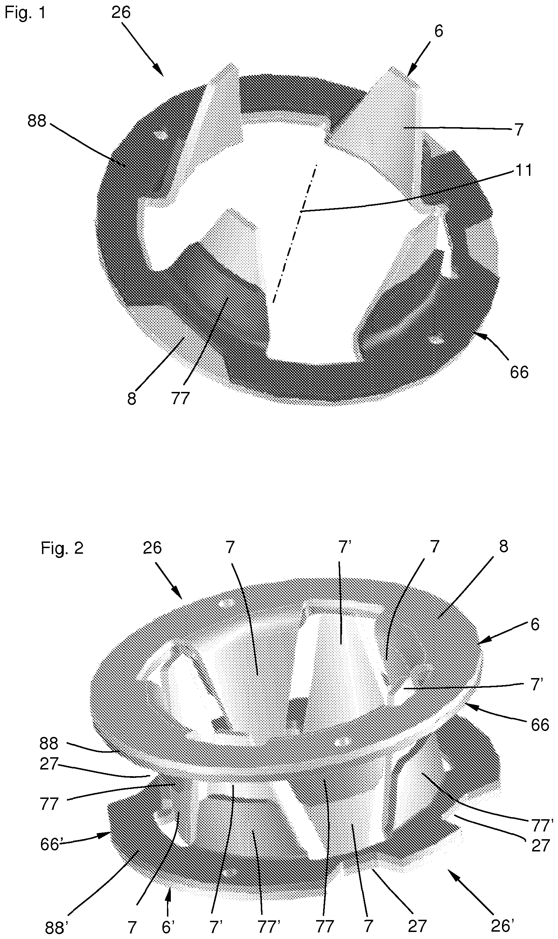

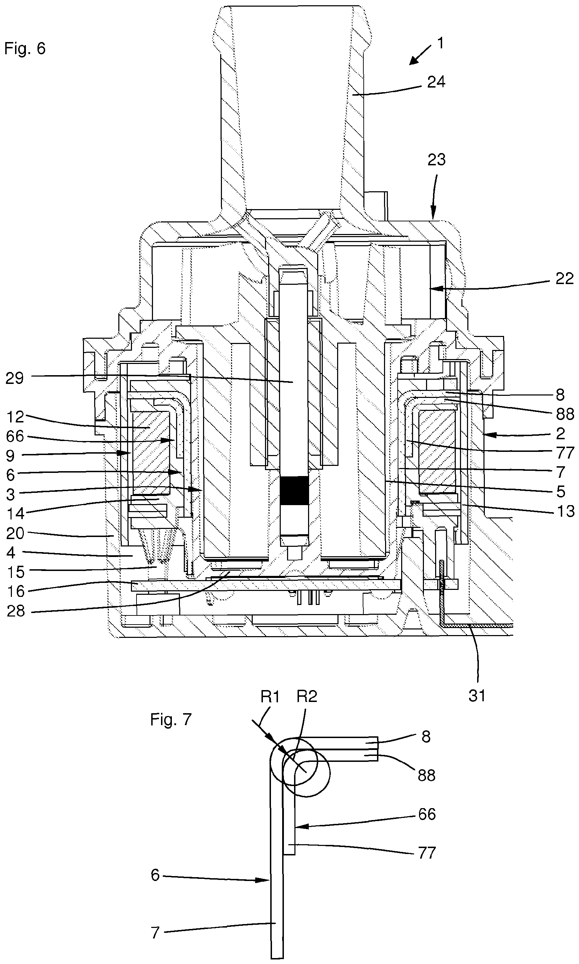

Die Fig. 1, 4 und 5 zeigen eine aus zwei unterschiedlichen Klauenpolblechen 6, 66 aufgebauten Teilstatorkern 26. Die Unterschiede der Klauenpolbleche 6, 66 bestehen im wesentlichen im unterschiedlichen Radius des einbeschriebenen Kreises der Klauenpole 7, 77. Beide Klauenpolbleche 6, 66 weisen einen Ring 8, 88 auf, von dem über einen Biegeradius R1, R2 (Fig. 7) die Klauenpole um 90° abgewinkelt und parallel zu einer Pumpenachse 11 verlaufen. Die Klauenpole 7, 77 sind im vorliegenden Beispiel in ihrer Grundform trapezförmig. Die Klauenpole 7, 77 weisen jeweils dieselbe Polung auf. Die beiden Ringe 8, 88 und die Klauenpole 7, 77 liegen großflächig aneinander an. Die Klauenpole 7, 77 sind parallel zu einer zentralen Pumpenachse 11 ausgerichtet

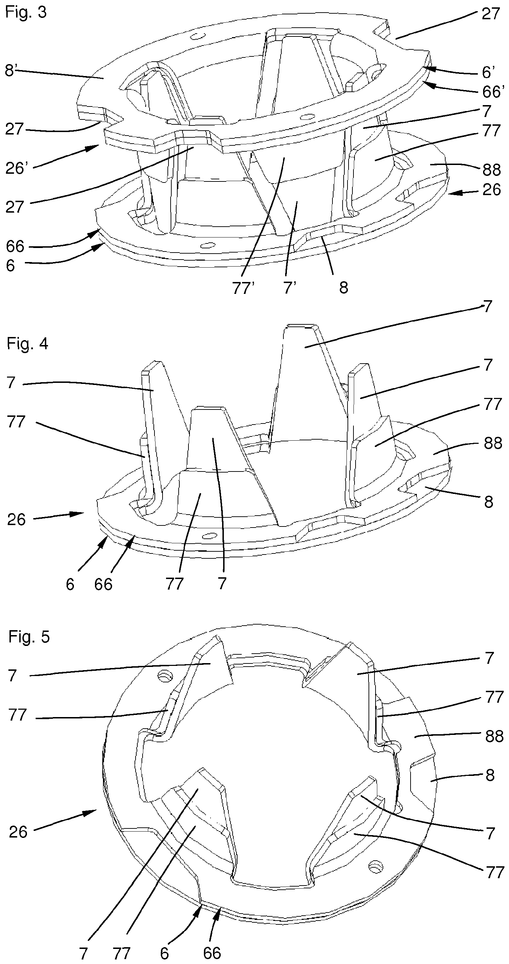

Die Fig. 2 und 3 zeigen einen aus zwei Teilstatoren 26, 26' zusammengesetzten Statorkern, bei dem die jeweils trapezförmig ausgebildeten Klauenpole 7, 7', 77, 77' unter Belassung eines Luftspalts ineinandergreifen und somit über den Umfang abwechselnd Nord- bzw. Südpole bilden. Die beiden Teilstatorkerne unterscheiden sich durch Aussparungen 27, die als Durchbrüche für die Wicklungsanschlüsse und als Verdrehsicherung dienen.

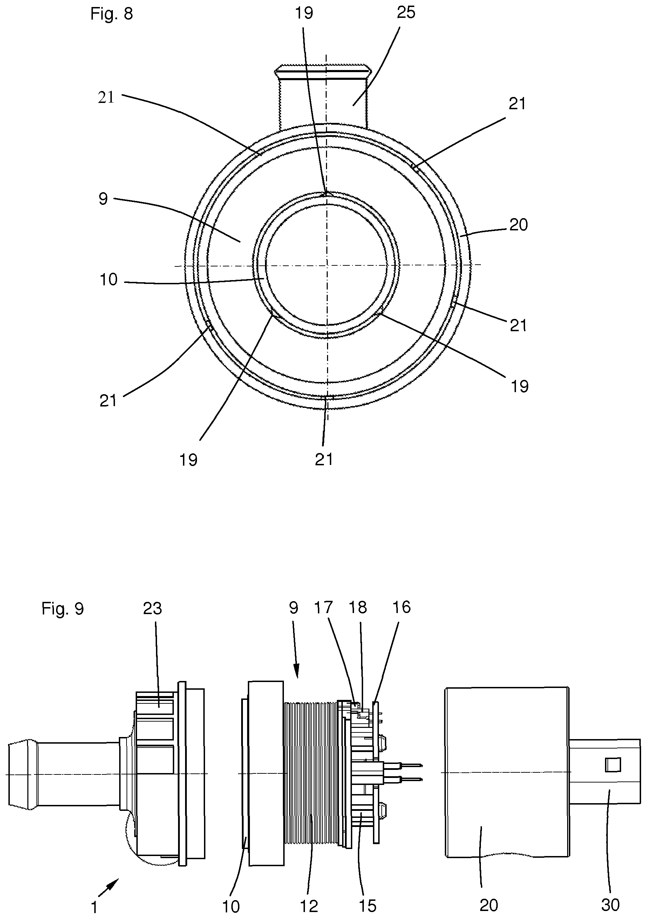

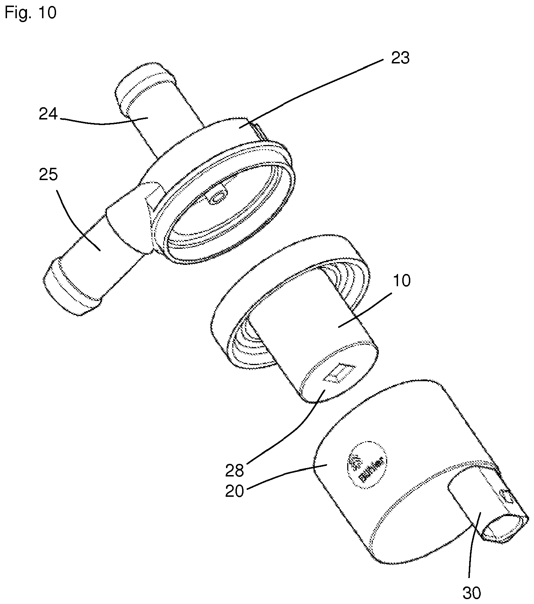

Fig. 6 zeigt eine Schnittdarstellung durch die Pumpe und den integrierten elektronisch kommutierten Gleichstrommotor, mit den Statorblechen 6, 66, bestehend aus den Klauenpolen 7, 77 und den Ringen 8, 88, wobei diese in einem Kunststoffformkörper 14 eingebettet sind, welcher durch Umspritzen der Klauenpolbleche hergestellt ist. Der Kunststoffformkörper ist ein eigenständiges Bauteil, das als Spulenkörper für eine Wicklung 12 dient. Der Kunststoffformkörper 14 bildet zusammen mit der Wicklung und einem Rückschlussring 13, der durch Umformung von Teilbereichen des Rückschlussringes 13 fest mit den Ringen 8, 88 der Klauenpolbleche 6, 66 verbunden ist, einen Klauenpolstator 9. Der Klauenpolstator 9 trägt durch mechanische Aufnahmemittel 15 eine Leiterplatte 16, die einerseits mit Enden der Wicklung 12 elektrisch verbunden ist und andererseits über Leitbleche 31 mit einem Stecker 30 (Fig. 9, 10). Der Klauenpolstator 9 ist um einen Spalttopf 10 herum angeordnet und mit diesem kraftschlüssig verbunden. Ein Motorgehäuse 20 bildet zusammen mit dem Spalttopf 10 einen Trockenraum 4 in dem der Klauenpolstator 9 flüssigkeitsdicht aufgenommen ist.

Innerhalb des Spalttopfs 10 befindet sich eine permanentmagnetische Pumpenrotoreinheit 3, die aus einem Motorabschnitt und einem Pumpenabschnitt besteht. Der Motorabschnitt ist radial innerhalb der Klauenpole 7, 77 angeordnet und weist einen Permanentmagnetring auf, der aus kunststoffgebundenem Magnetmaterial zusammen mit einem Kreiselpumpenlaufrad 22 und einem Lagerschaft urgeformt ist. Die Pumpenrotoreinheit 3 ist auf einer Achse 29 gelagert, die einerseits in einem Boden 28 des Spalttopfs 10 und andererseits im Pumpengehäuse befestigt ist. Die Pumpenrotoreinheit 3 befindet sich in einem Nassraum 5, der durch das Pumpengehäuse 23 und den Spalttopf 10 begrenzt wird. Das Pumpengehäuse umfasst einen achssymmetrischen Saugstutzen 24 und einen Druckstutzen 25 (Fig. 8), der radial zur Pumpenachse 11 verläuft. Der Permanentmagnet der Pumpenrotoreinheit kann auch aus gesintertem Ferrit-Material, kunststoffgebundenem Ferrit-Material, kunststoffgebundenem Seltenerdmaterial oder gepresstem Seltenerdmaterial bestehen. Der Ringmagnet kann aus Segmenten zusammengesetzt sein, zusätzlich auch mit Kunststoffmaterial umspritzt oder von einem metallischen Ring umgeben sein. Weiter kann die Pumpenrotoreinheit auch mit einem weichmagnetischen Rückschlussring versehen sein.

Fig .7 zeigt die Klauenpolbleche 6, 66 im Übergangsbereich zwischen dem Ring 8, 88 und den Klauenpolen 7, 77, der durch Radien R1, R2 gekennzeichnet ist. Die Radien R1 und R2 sind gleich groß oder zumindest in der gleichen Größenordnung.

Fig. 8 zeigt wie der Klauenpolstator 9 auf dem Spalttopf 10 und im Motorgehäuse 20 eingebaut ist. Der Spalttopf 10 ist mit drei achsparallelen Rippen 19 einstückig, auf welche der Klauenpolstator 9 aufgepresst ist. Das Motorgehäuse 20 ist mit fünf achsparallelen Rippen 21 einstückig, über welche das Motorgehäuse straff auf dem Klauenpolstator 9 aufgezogen ist. Die Rippen dienen dazu, dass ein von der Pumpenrotoreinheit erzeugtes Geräusch nur in begrenztem Maße auf das Motorgehäuse übertragen wird.

Fig. 9 zeigt eine Explosionsdarstellung mit dem Pumpengehäuse 23, dem Spalttopf 10, dem Klauenpolstator 9, mit der Wicklung 12, der Leiterplatte 16, die über Aufnahmemittel 15 am Klauenpolstator befestigt sind, Aufnahmen 17 für Klemmschneidverbinder 18 und mit der Leiterplatte 16 elektrisch verbundene Klemmschneidverbinder 18 (Darstellung ohne Rückschlussring) und dem Motorgehäuse 20 mit einem Stecker 30.

Fig. 10 zeigt eine weitere Explosionsdarstellung der Gehäuseteile der Pumpe, mit dem Pumpengehäuse 23, mit dem Saugstutzen 24 und dem Druckstutzen 25, dem Spalttopf mit dem Boden 28 und dem Motorgehäuse 20.

### Bezugszeichenliste

- 1: Pumpe
- 2: Gleichstrommotor
- 3: Pumpenrotorbaueinheit
- 4: Trockenraum
- 5: Nassraum
- 6, 66, 6', 66': Klauenpolbleche
- 7, 77, 7', 77': Klauenpole
- 8, 88, 8', 88': Ring
- 9: Klauenpolstator
- 10: Spalttopf
- 11: Pumpenachse
- 12: Wicklung
- 13: Rückschlussring
- 14: Kunststoffformkörper
- 15: Aufnahmemittel für Leiterplatte
- 16: Leiterplatte
- 17: Aufnahmemittel für Klemmschneidverbinder
- 18: Klemmschneidverbinder
- 19: rippenartige Bereiche
- 20: Motorgehäuse
- 21: Rippen
- 22: Kreiselpumpenlaufrad
- 23: Pumpengehäuse
- 24: Saugstutzen
- 25: Druckstutzen
- 26, 26': Teilstatorkern
- 27: Aussparung
- 28: Boden des Spalttopfs
- 29: Achse
- 30: Stecker
- 31: Leitblech

## Patentansprüche

1. Pumpe (1) mit integriertem elektronisch kommutierten Gleichstrommotor (2) mit permanentmagnetischem in einem Nassraum angeordneten Innenrotor, der mit einem Kreiselpumpenlaufrad (22) eine kompakte Pumpenrotorbaueinheit (3) bildet, in einem Trockenraum (4) angeordnete, Klauenpolbleche (6, 6') aus weichmagnetischem Werkstoff, eine ringförmige Wicklung (12) und einen auf die Klauenpolbleche (6, 6') montierten und um die Wicklung (12) herum angeordneten weichmagnetischen Rückschlussring (13) umfassenden, Klauenpolstator (9) und einem Spalttopf (10), der den Trockenraum vom Nassraum (5) trennt, **gekennzeichnet durch** die Kombination folgender Merkmale:
a) der Klauenpolstator (9) hat vier Klauenpolbleche (6, 66), die jeweils mehrere sich parallel zur Pumpenachse (11) erstreckende und an einen rechtwinklig zur Pumpenachse angeordneten Ring (8, 88) anschließende Klauenpole (7, 77) umfasst;
b) zwei gleichpolige Klauenpolbleche (6, 66) und zwei gegenpolige Klauenpolbleche (6', 66') wirken mit derselben Wicklung zusammen;
c) die gleichpoligen sowie die gegenpoligen Klauenpolbleche bestehen jeweils aus zwei unterschiedlich ausgebildeten Klauenpolblechen (6, 66, 6', 66') die ineinandergeschachtelt sind, so dass die Klauenpole (7, 77, 7', 77') zweier gleichpoliger Klauenpolbleche radial unterschiedlich weit von der Pumpenrotorbaueinheit entfernt aber in demselben Winkelsektor angeordnet sind, wobei der radiale Unterschied der Blechdicke der Klauenpole entspricht, die der Pumpenrotorbaueinheit näher sind;
d) die Länge der Klauenpole (7, 7') in achsparalleler Richtung, die radial näher an der Pumpenrotorbaueinheit angeordnet sind, ist größer als der Radius eines einbeschriebenen Kreises der von denselben Klauenpolen (7, 7') begrenzt wird;
e) die Biegeradien (R1, R2) der ineinandergeschachtelten Klauenpolbleche (6, 66 bzw. 6', 66') im Übergangsbereich zwischen dem Ring (8, 88 bzw. 8', 88') und den Klauenpolen (7, 77 bzw. 7', 77') sind zumindest annähernd gleich groß, so dass zwischen den Klauenpolblechen (6, 66 bzw. 6', 66') im Übergangsbereich ein Spalt entsteht;
f) zumindest an einen Ring (8, 8') eines Klauenpolblechs schliesst an einer von der Wicklung abgewandten Seite ein Kunststoffformkörper (14) an, der Aufnahmemittel (15, 17) für eine Leiterplatte (16) und Klemmschneidverbinder (18) aufweist, wobei der Kunststoffformkörper (14) durch Umspritzen hergestellt ist und die vier Klauenpolbleche (6, 6', 66, 66') zumindest teilweise umschließt und fixiert wodurch der Stator einen kompakten Ringkörper bildet, der nur über rippenartige und/oder noppenartige Bereiche am Spaltrohr fest anliegt.

2. Pumpe nach Anspruch 1, **dadurch gekennzeichnet, dass** die Länge der Klauenpole (77, 77') in achsparalleler Richtung, die radial weiter von der Pumpenrotorbaueinheit entfernt angeordnet sind, kleiner als der Radius desselben einbeschriebenen Kreises ist.

3. Pumpe nach Anspruch 1 oder 2, **dadurch gekennzeichnet, dass** die Polfläche der kürzeren Klauenpole (77, 77') zwischen 30% bis 100% der Polfläche der längeren Klauenpole (7, 7') beträgt.

4. Pumpe nach Anspruch 1, 2 oder 3, **dadurch gekennzeichnet, dass** die Polfläche der kürzeren Klauenpole (77, 77') zwischen 40% bis 75% der Polfläche der längeren Klauenpole (7, 7') beträgt.

5. Pumpe nach Anspruch 1, 2, 3 oder 4, **dadurch gekennzeichnet, dass** die Länge der kürzeren Klauenpole (77, 77') parallel zur Pumpenachse 30% bis 100% der Länge der längeren Klauenpole (7, 7') beträgt.

6. Pumpe nach Anspruch 1, 2, 3, 4 oder 5, **dadurch gekennzeichnet, dass** die Länge der kürzeren Klauenpole (77, 77') parallel zur Pumpenachse 30% bis 60% der Länge der längeren Klauenpole (7, 7') beträgt.

7. Pumpe nach Anspruch 1, 2, 3, 4, 5 oder 6, **dadurch gekennzeichnet, dass** die Blechdicke der Klauenpolbleche (66, 66') mit den kürzeren Klauenpolen (77, 77') kleiner oder gleich der Blechdicke der Klauenpolbleche (6, 6') mit den Längeren Klauenpolen (7, 7') ist.

8. Pumpe nach Anspruch 7, **dadurch gekennzeichnet, dass** die Blechdicke der Klauenpolbleche (66, 66') mit den kürzeren Klauenpolen (77, 77') kleiner ist als die Blechdicke der Klauenpolbleche (6, 6') mit den längeren Klauenpolen (7, 7').

9. Pumpe nach zumindest einem der vorangehenden Ansprüche, **dadurch gekennzeichnet, dass** die ineinander geschachtelten gleichpoligen Klauenpolbleche (6, 66 und 6', 66') durch eine Isolierschicht, z.B. eine Lackschicht elektrisch voneinander isoliert sind.

10. Pumpe nach zumindest einem der vorangehenden Ansprüche, **dadurch gekennzeichnet, dass** alle radial benachbarten gleichpoligen Klauenpole (7, 77, 7', 77') miteinander punktverschweißt sind.

11. Pumpe nach zumindest einem der vorangehenden Ansprüche, **dadurch gekennzeichnet, dass** die Klauenpolbleche (6, 6') und (66, 66') über ihre Ringe (8, 8') und (88, 88') durch mindestens zwei Schweißpunkte miteinander punktverschweisst sind.

12. Pumpe nach zumindest einem der vorangehenden Ansprüche, **dadurch gekennzeichnet, dass** der Ring (88, 88') der Klauenpolbleche mit den kürzeren Klauenpolen einen geringfügig kleineren Außendurchmesser als der Ring (8, 8') der Klauenpolbleche mit den längeren Klauenpolen aufweist, wobei der Durchmesserunterschied weniger als 0,1mm beträgt.

## Claims

1. A pump (1) having an integrated, electronically commutated direct-current motor (2) with a permanent-magnetic inner rotor arranged in a wet chamber, which inner rotor together with a centrifugal pump impeller (22) forms a compact pump-rotor unit (3), claw-pole plates (6, 6') arranged in a dry chamber (4) and made of a soft magnetic material, an annular winding (12) and a claw-pole stator (9), mounted on the claw-pole plates (6, 6') and comprising a soft magnetic return ring (13) arranged around the winding (12), and a split pot (10) which separates the dry chamber from the wet chamber (5), **characterised by** the combination of the following features:
a) the claw-pole stator (9) has four claw-pole plates (6, 66) each of which comprises a plurality of claw poles (7, 77) extending parallel to the pump axis (11) and adjoining a ring (8, 88) arranged at right angles to the pump axis;
b) two claw-pole plates (6, 66) of the same polarity and two claw-pole plates (6, 66') of opposite polarity cooperate with the same winding;
c) the claw-pole plates of the same polarity and opposite polarity are each composed of two claw-pole plates (6, 66, 6', 66') of differing design which nest, so that the claw-poles (7, 77, 7', 77') of two claw-pole plates of the same polarity are at different radial distances from the pump-rotor unit however are arranged in the same angular sector, wherein the radial difference corresponds to the plate thickness of the claw poles which are closer to the pump-rotor unit;
d) the length, in an axially-parallel direction, of the claw poles (7, 7') arranged radially closer to the pump-rotor unit is greater than the radius of an inscribed circle bounded by the same claw poles (7, 7');
e) the bending radii (R1, R2) of the nested claw-pole plates (6, 66 and 6', 66' respectively) are at least approximately equal in size in the transition region between the ring (8, 88 and 8', 88' respectively) and the claw poles (7, 77 and 7', 77' respectively), so that a gap between the claw-pole plates (6, 66 and 6', 66' respectively) arises in the transition region;
f) a plastics shaped body (14) adjoins, at a side remote from the winding, at least one ring (8, 8') of a claw-pole plate, which plastics shaped body has receiving means (15, 17) for a printed circuit board (16) and clamp cutting connectors (18), wherein the plastics shaped body (14) is manufactured by encapsulation and at least partially encloses and fixes the four claw-pole plates (6, 6', 66, 66'), whereby the stator forms a compact annular body which only firmly contacts the split pipe via rib-like and/or stud-like regions.

2. A pump according to claim 1, **characterised in that** the length, in an axially-parallel direction, of the claw poles (77, 77') arranged radially at a greater distance from the pump- rotor unit is smaller than the radius of the same inscribed circle.

3. A pump according to claim 1 or 2, **characterised in that** the pole surface of the shorter claw poles (77, 77') amounts to between 30% to 100% of the pole surface of the longer claw poles (7, 7').

4. A pump according to claim 1, 2 or 3, **characterised in that** the pole surface of the shorter claw poles (77, 77') amounts to between 40% to 75% of the pole surface of the longer claw poles (7, 7').

5. A pump according to claim 1, 2, 3 or 4, **characterised in that** the length of the shorter claw poles (77, 77') parallel to the pump axis amounts to 30% to 100% of the length of the longer claw poles (7, 7').

6. A pump according to claim 1, 2, 3, 4 or 5, **characterised in that** the length of the shorter claw poles (77, 77') parallel to the pump axis amounts to 30% to 60% of the length of the longer claw poles (7, 7').

7. A pump according to claim 1, 2, 3, 4, 5 or 6, **characterised in that** the plate thickness of the claw-pole plates (66, 66') with the shorter claw poles (77, 77') is smaller than or equal to the plate thickness of the claw-pole plates (6, 6') with the longer claw poles (7, 7').

8. A pump according to claim 7, **characterised in that** the plate thickness of the claw-pole plates (66, 66') with the shorter claw poles (77, 77') is less than the plate thickness of the claw-pole plates (6, 6') with the longer claw poles (7, 7').

9. A pump according to at least one of the preceding claims, **characterised in that** the nested, same-polarity claw-pole plates (6, 66 and 6', 66') are electrically insulated from one another by an insulating layer, e.g. a varnish layer.

10. A pump according to at least one of the preceding claims, **characterised in that** all radially adjacent, same-polarity claw poles (7, 77, 7', 77') are spot welded to one another.

11. A pump according to at least one of the preceding claims, **characterised in that** the claw-pole plates (6, 6') and (66, 66') are spot welded to one another via their ring (8, 8') and (88, 88') by at least two welding spots.

12. A pump according to at least one of the preceding claims, **characterised in that** the ring (88, 88') of the claw-pole plates with the shorter claw poles has a slightly smaller outside diameter than the ring (8, 8') of the claw-pole plates with the longer claw poles, wherein the diameter difference amounts to less than 0.1mm.

## Revendications

1. Pompe (1) avec un moteur à courant continu (2) intégré à commutation électronique avec un rotor intérieur à aimants permanents disposé dans un espace humide, qui forme avec une roue à aubes de pompe centrifuge (22) une unité modulaire de rotor de pompe (3) compacte, un stator à pôles à griffes (9) comprenant des tôles à pôles à griffes (6, 6') en matériau magnétique doux disposées dans un espace sec (4), un enroulement annulaire (12) et une bague de retour (13) magnétique douce montée sur les tôles à pôles à griffes (6, 6') et disposée autour de l'enroulement (12), et une chemise d'entrefer (10), qui sépare l'espace sec de l'espace humide (5), **caractérisée par** la combinaison des caractéristiques suivantes :
a) le stator à pôles à griffes (9) présente quatre tôles à pôles à griffes (6, 66), qui comprennent respectivement plusieurs pôles à griffes (7, 77) s'étendant parallèlement à l'axe de pompe (11) et se raccordant à une bague (8, 88) disposée perpendiculairement à l'axe de pompe ;
b) deux tôles à pôles à griffes (6, 66) de même polarité et deux tôles à pôles à griffes (6', 66') de polarité opposée coopèrent avec le même enroulement ;
c) les tôles à pôles à griffes de même polarité ainsi que celles de polarité opposée sont constituées respectivement de deux tôles à pôles à griffes (6, 66, 6', 66') réalisées de façon différente, qui sont emboîtées, de sorte que les pôles à griffes (7, 77, 7', 77') de deux tôles à pôles à griffes de même polarité sont disposés de manière plus ou moins éloignée radialement de l'unité modulaire de rotor de pompe mais dans le même secteur angulaire, dans laquelle la différence radiale correspond à l'épaisseur de tôle des pôles à griffes qui sont plus proches de l'unité modulaire de rotor de pompe ;
d) la longueur des pôles à griffes (7, 7') dans la direction parallèle à l'axe, qui sont disposés radialement plus près de l'unité modulaire de rotor de pompe, est supérieure au rayon d'un cercle inscrit qui est délimité par les mêmes pôles à griffes (7, 7') ;
e) les rayons de courbure (R1, R2) des tôles à pôles à griffes (6, 66 ou 6', 66') emboîtées, dans la zone de transition entre la bague (8, 88 ou 8', 88') et les pôles à griffes (7, 77 ou 7', 77'), sont au moins approximativement de même dimension, de sorte qu'une fente est produite entre les tôles à pôles à griffes (6, 66 ou 6', 66') dans la zone de transition ;
f) un corps moulé en matière plastique (14), qui présente des moyens de logement (15, 17) pour une carte de circuits imprimés (16) et des connecteurs auto-dénudants (18), se raccorde au moins à une bague (8, 8') d'une tôle à pôles à griffes sur une face opposée à l'enroulement, dans laquelle le corps moulé en matière plastique (14) est fabriqué par surmoulage et entoure au moins en partie et fixe les quatre tôles à pôles à griffes (6, 6', 66, 66'), ce qui a pour effet que le stator forme un corps annulaire compact, qui ne s'applique contre la chemise d'entrefer que sur des zones de type nervure et/ou de type picot.

2. Pompe selon la revendication 1, **caractérisée en ce que** la longueur des pôles à griffes (77, 77') dans la direction parallèle à l'axe, qui sont radialement plus éloignés de l'unité modulaire de rotor de pompe, est inférieure au rayon du même cercle inscrit.

3. Pompe selon la revendication 1 ou 2, **caractérisée en ce que** la surface de pôle des pôles à griffes (77, 77') plus courts atteint entre 30 % à 100 % de la surface de pôle des pôles à griffes (7, 7') plus longs.

4. Pompe selon la revendication 1, 2 ou 3, **caractérisée en ce que** la surface de pôle des pôles à griffes (77, 77') plus courts atteint entre 40 % à 75 % de la surface de pôle des pôles à griffes (7, 7') plus longs.

5. Pompe selon la revendication 1, 2 3 ou 4, **caractérisée en ce que** la longueur des pôles à griffes (77, 77') plus courts atteint parallèlement à l'axe de pompe 30 % à 100 % de la longueur des pôles à griffes (7, 7') plus longs.

6. Pompe selon la revendication 1, 2, 3, 4 ou 5, **caractérisée en ce que** la longueur des pôles à griffes (77, 77') plus courts parallèlement à l'axe de pompe atteint 30 % à 60 % de la longueur des pôles à griffes (7, 7') plus longs.

7. Pompe selon la revendication 1, 2, 3, 4, 5 ou 6, **caractérisée en ce que** l'épaisseur de tôle des tôles à pôles à griffes (66, 66') avec les pôles à griffes plus courts (77, 77') est inférieure ou égale à l'épaisseur de tôle des tôles à pôles à griffes (6, 6') avec les pôles à griffes plus longs (7, 7).

8. Pompe selon la revendication 7, **caractérisée en ce que** l'épaisseur de tôle des tôles à pôles à griffes (66, 66') avec les pôles à griffes (77, 77') plus courts est inférieure à l'épaisseur de tôle des tôles à pôles à griffes (6, 6') avec les pôles à griffes (7, 7') plus longs.

9. Pompe selon au moins l'une des revendications précédentes, **caractérisée en ce que** les tôles à pôles à griffes (6, 66 et 6', 66') de même polarité emboîtées sont isolées électriquement les unes des autres par une couche isolante, par exemple une couche de vernis.

10. Pompe selon au moins l'une des revendications précédentes, **caractérisée en ce que** tous les pôles à griffes (7, 77, 7', 77') de même polarité voisins radialement sont soudés par points les uns aux autres.

11. Pompe selon au moins l'une des revendications précédentes, **caractérisée en ce que** les tôles à pôles à griffes (6, 6') et (66, 66') sont soudées par points les unes aux autres par au moins deux points de soudage par l'intermédiaire de leur bagues (8, 8') et (88, 88').

12. Pompe selon au moins l'une des revendications précédentes, **caractérisée en ce que** la bague (88, 88') des tôles à pôles à griffes avec les pôles à griffes plus courts présente un diamètre extérieur légèrement plus petit que la bague (8, 8') des tôles à pôles à griffes avec les pôles à griffes plus longs, dans laquelle la différence de diamètre est inférieure à 0,1 mm.
